# EUROPEAN PATENT APPLICATION

(11) **EP 2 878 244 A1**
(43) Date of publication of application: **03.06.2015**
(21) Application number: 13823281.4
(22) Date of filing: 13.06.2013
(51) Int. Cl.: A47J 43/04, A47J 27/04

(54) **FOOD PROCESSOR UTENSIL FOR STEAM COOKING**

(30) Priority: 25.07.2012 ES 201231190
(71) Applicant: Dragon Fruit Project, S.L., 48004 Bilbao Vizcaya (ES)
(72) Inventor: BARRÓN CORRALES, Yolanda, 48004 Bilbao (Vizcaya) (ES); PASCUAL CALVO, Sergio, 48004 Bilbao (Vizcaya) (ES)
(74) Representative: Ungria López, Javier
(86) International application number: PCT/ES2013/070383
(87) International publication number: WO 2014/016451

(57) **Abstract**

The invention relates to a food processor utensil (4) for steam cooking, comprising: a lid (2) in turn comprising a set of openings (2.1) through which the steam is released; and a casing (1, 1') having a tubular structure of variable cross-section, into which a basket (3) is inserted. The casing comprises an upper end (1.A), a lower end (1.B) and a central body (1.C) which surrounds a central portion (3.C) of the basket (3). In this way, the casing (1, 1') is closed with the lid (2) with the basket (3) disposed therein, such that the steam enters the basket (3) through the lower basket portion (3.B) and passes longitudinally through the basket (3) before exiting through the set of openings (2.1) in the lid (2), the steam thereby cooking the food contained in the basket (3).

## Description

### OBJECT OF THE INVENTION

The present invention relates to a utensil compatible with food processors for steam cooking, which saves space when cooking and storing, facilitates the cleaning thereof and also optimises the performance of the processor when cooking small amounts of food.

### BACKGROUND OF THE INVENTION AND TECHNICAL PROBLEM THAT IS RESOLVED

The food processors that are currently known are those that mainly comprise a base, a bowl, a basket, a lid and a container for steam cooking.

The electronics of the food processor are provided in the base, as well as all the mechanical elements that enable said food processors to operate. Likewise, it comprises an area in which the bowl is placed in order to cook.

The bowl is the main container where the food to be cooked is placed. This bowl consists of an upper portion that is closed with a lid in order to maintain the heat generated inside, and inside the bowl, depending on the recipe to be made, a basket is inserted, whose design provides for suitable fixing inside the bowl, where the food to be cooked is placed.

Additionally, these food processors are complemented by a container for steam cooking. This container for steam cooking is placed on the lid that closes bowl, enabling steam to pass from the bowl through to said container for steam cooking via an opening in the upper lid of the bowl.

One of the problems presented by the set of elements that makes up the container for steam cooking is the fact that since they are different elements with meshed areas, it requires a longer period of time to clean, as well as a greater expense of resources such as hot water and detergent.

Likewise, said container has large dimensions, which implies the need to have a space that is large enough for it to be stored when it is not being used or in the dishwasher when it has to be cleaned.

A second problem with these containers for steam cooking is that due to the dimensions thereof, should one want to cook small amounts of food, it is not energy efficient given that to be able to cook these foods it is necessary for the whole container to be filled with steam, which results in the food processor having low performance.

The present invention discloses a utensil for steam cooking in food processors that fulfils the same function as the aforementioned container for steam cooking, but resolving the problems and drawbacks that result from the use of the known cooking container that is made up of several elements with a high total volume and meshed areas, since it comprises a geometry that improves the performance and energy efficiency of the processor with smaller amounts of foods, favouring its storage and cleaning.

### DESCRIPTION OF THE INVENTION

The invention that is described discloses a utensil for steam cooking in food processors, which provides greater simplicity when cleaning it. Moreover, the present utensil saves space in dishwashers for cleaning thereof, when cooking and even when being stored in household cabinets until it is used. Additionally, the present utensil brings about greater performance when the food processor is used to steam cook small amounts of food, due to its low volume.

With the purpose of reaching the objectives and avoiding the drawbacks mentioned in the sections above, the invention proposes a food processor utensil for steam cooking that comprises a lid in turn comprising a set of openings through which steam is released, and a casing with a tubular structure of variable cross-section into which a basket is inserted. The casing comprises an upper end, a lower end, and a central body, which surrounds a central portion of the basket.

One very important characteristic of the present invention is that the casing is closed with the lid, with the basket contained therein, such that the steam enters the basket through a lower basket portion and passes longitudinally through the basket before exiting through the set of openings in the lid, the steam thereby cooking the food contained in the basket.

Another important characteristic of the present invention is that the casing, on the upper end, comprises at least one lip on which a flange of the basket rests. This lip may run around the outside perimeter of the upper end converging towards the inside.

Additionally, the utensil, object of the present invention, comprises fixing areas to prevent the relative rotation of the casing with respect to the basket, which fixing areas may be selected between slots, a first notch and a combination thereof.

Equally, the utensil comprises housings where protrusions of the basket are housed, and a skirt at the lower end for a tight joint between the lower end and a lid of the food processor, which skirt may be made of rubber.

### DESCRIPTION OF THE DRAWINGS

The invention is complemented, in order for the present description to be more readily understood, by a set of drawings in which, by way of illustration and not limitation, the following has been represented:
- Figure 1 shows a top perspective view of a casing according to a preferred embodiment of the present invention.
- Figure 2 shows a plan view of the casing shown in figure 1.
- Figure 3 shows a top perspective view of a casing according to another preferred embodiment of the present invention.
- Figure 4 shows a bottom perspective view of a first lid according to a preferred embodiment of the present invention.
- Figure 5 shows a bottom view of the first lid shown in figure 4.
- Figure 6 shows a set formed of the casing in figure 3 and the first lid shown in figures 4 and 5.
- Figure 7 shows an exploded view of a set made up of the lid shown in figures 4 and 5, a basket, the casing shown in figure 3, a second lid, a bowl and a food processor.

A list of the various elements represented in the figures that are part of the invention is provided below:
1, 1' = Casing
1.1 = Slots
1.2 = First notch
1.3 = Housings
1.4 = Lip
1.A = Upper end
1.B = Lower end
1.C = Central body
2 = First lid
2.1 = Openings
2.2 = Second notch
2.A = Groove
3 = Basket
3.A = Upper portion
3.B = Lower portion
3.C = Central portion
3.1 = Protrusions
3.2 = Third notch
3.3 = Through-holes
3.4 = Flange
4 = Food processor
4.1 = Bowl
4.2 = Lid of the processor

### DETAILED DESCRIPTION OF THE PREFERRED EMBODIMENT OF THE INVENTION

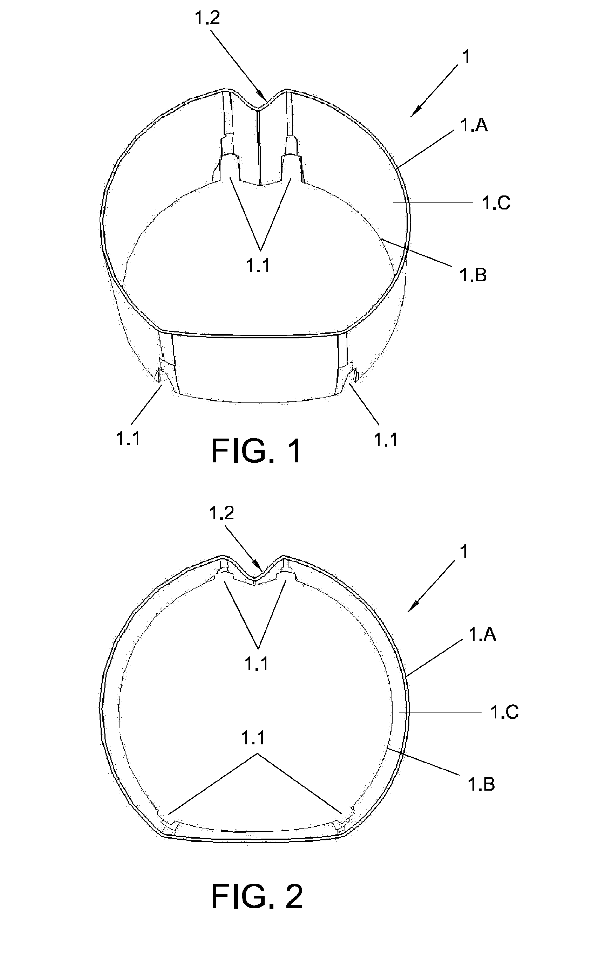

As stated previously, and as may be seen in figure 1, the present invention comprises a food processor utensil for steam cooking food. Said utensil comprises a casing (1) having a tubular structure of variable cross-section to house inside thereof a basket (3) typical of the aforementioned food processors and a first lid (2) in turn comprising a set of openings (2.1) through which the steam is released.

The casing (1) comprises an upper end (1.A), a central body (1.C) and a lower end (1.B). The upper end (1.A) is the end of the tubular structure of the casing (1) through which the basket (3) is inserted, the lower end (1.B) being the end that has a perimeter with smaller dimensions, such that the casing (1) resembles a geometric frustoconical shape. The cone-shape that each tubular structure has may be clearly seen in the plan view of the casing (1, 1'), figure 2.

The central body (1.C) is the portion of the casing that surrounds the basket. The steam enters the basket (3) through a lower portion (1.B) of the same, and as the casing (1) surrounds the basket (3), the steam is forced to rise, passing upwards through the basket (3). This occurs because, despite the basket (3) having through-holes (3.3) both in the lower portion (3.B) and the central portion (3.C) thereof, the casing (1) lacks holes in the central body (1.C), as may be seen in figures 1 and 2. The lid (2), as described further on, retains the steam whilst at the same time allowing a small amount of steam to exit though the openings (2.1), thereby steam cooking the food contained in the basket (3).

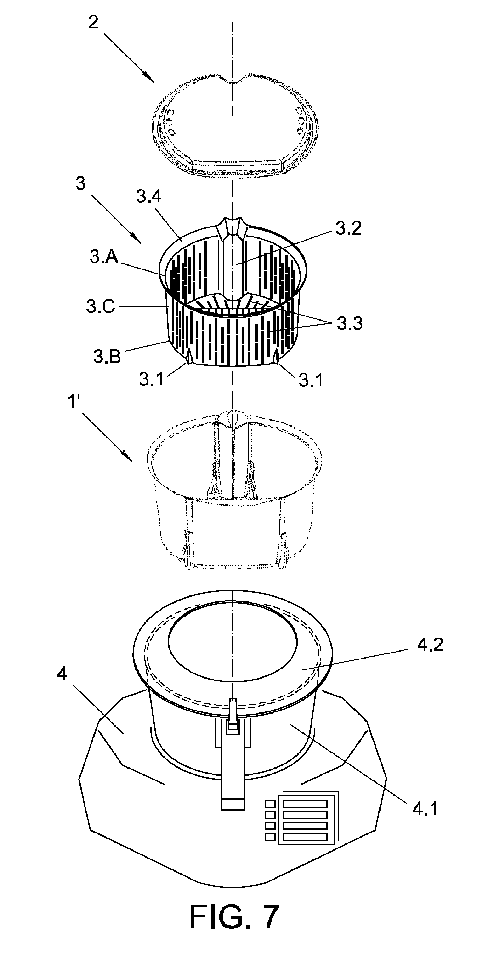

The casing (1) comprises complementary fixing areas. These fixing areas are preferably slots (1.1) and/or a first notch (1.2), as well as any other element that prevents the relative rotation of the casing (1) with respect to the basket (3). The slots (1.1) are areas that protrusions (3.1) arranged on the basket (3) lock into, and which contribute to fixing the position of the casing (1) with respect to the basket (3), similarly to the first notch (1.2), which is complementary to a third notch (3.2) comprised by the basket (3). Said protrusions (3.1) and the aforementioned third notch (3.2) of the basket (3) may be seen in figure 7.

Another aspect in the geometry of the casing (1) that contributes to the fixing thereof (1) with respect to the basket (3) is a section that is less curved with respect to the rest of the lateral contour thereof, arranged in the area circumferentially opposite the first notch (1.2) between the two slots (1.1). This geometry in said section is due to the fact that it is complementary to a flatter section of the basket (3) with respect to the rest of the lateral contour thereof.

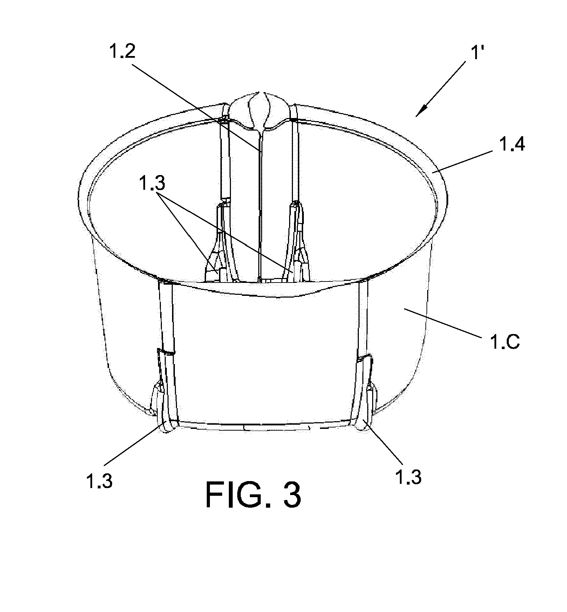

Figure 3 shows another preferred embodiment of the present invention. The casing (1') in this embodiment comprises housings (1.3) in the slots (1.1), a skirt (not shown in the figures) in an area of the central body (1.C) close to the lower end (1.B), and which covers the entire contour of the casing (1'), and a lip (1.4) on the upper end (1.A). All these accessories may be used individually and fulfil the function of providing tightness when the present invention is being used. The housings (1.3) are added such that, in the area of the casing (1') that the protrusions (3.1) lock into, there is no open space through which the steam may exit from the inside of the casing (1'). The skirt may be included to assist the tight joint with a lid (4.2) of the food processor (4) when steam cooking food. The lip (1.4) on the upper end (1.A) may be included to assist not only in supporting the basket (3) on the casing (1'), but also in making the tightness in the closure of the casing (1'), with the basket (3) disposed therein, with the first lid (2). With these aims, the preferred embodiment that may be seen in figure 3, comprises the lip (1.4), which is an outer perimeter lip that converges towards the inside of the casing (1'). The fact that it is a perimeter lip is for the tightness in the closure, by having the same thickness around the entire perimeter, and the fact that it is on the outside and converges towards the inside of the casing (1') is to adapt to the geometry of the basket (3) that is inserted through its upper end (1.A).

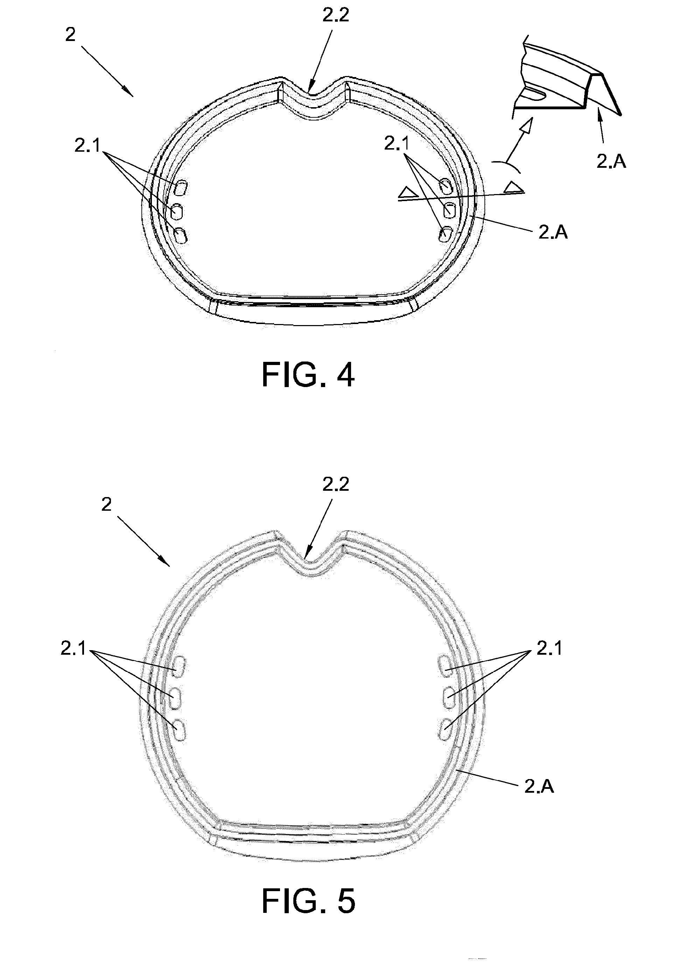

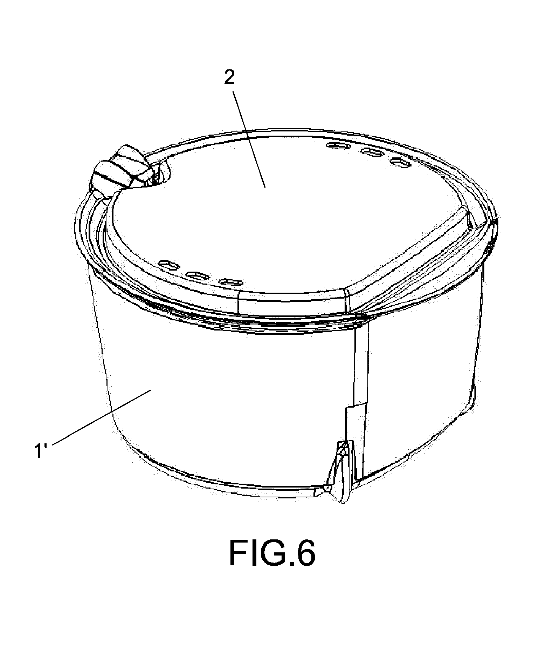

Figures 4 and 5 show the first lid (2) that comprises the set of openings (2.1) and a groove (2.A), as well as a second notch (2.2) in accordance with the first notch of the casing (1, 1'). The groove (2.A) creates the closure by locking. The outer inclined section of the groove (2.A) rests on an outer perimeter flange (3.4) converging towards the inside of the basket (3), shown in figure 7, against the outer perimeter lip (1.4) converging towards the inside of the casing (1') thus creating the closure. The set of openings (2.1), on the other hand, enable a necessary and measured release of steam, without this release being excessive for steam cooking food. Figure 6 shows the casing (1') closed by this first lid (2), the basket (3) being disposed therein.

Figure 7 shows an exploded view of the arrangement of the first lid (2), the basket (3), the casing (1'), the lid of the processor (4.2), a bowl (4.1) and a food processor (4). To steam cook food, the basket (3) is first inserted into the casing (1') through the upper end (1.A) of the casing (1') itself in order to then close the casing (1') with the first lid (2). Then, this set is placed on the lid of the processor (4.2), this lid of the processor (4.2) closing the bowl (4.1). The bowl (4.1) in turn is disposed in the food processor (4).

Having described the nature of the invention, may it be stated for due record that said invention is not limited to the exact details of this explanation, but rather, on the contrary, appropriate modifications thereof may be made, so long as they do not alter the essential characteristics thereof.

## Claims

1. A food processor utensil (4) for steam cooking, **characterized in that** it comprises:
- a lid (2) in turn comprising a set of openings (2.1) through which steam is released, and
- a casing (1, 1') having a tubular structure of variable cross-section into which a basket (3) is inserted, which comprises:
∘ an upper end (1.A),
∘ a lower end (1.B), and
∘ a central body (1.C), which surrounds a central portion (3.C) of the basket (3),
such that the casing (1, 1') is closed with the lid (2) with the basket (3) disposed therein, such that the steam enters the basket (3) through a lower portion (3.B) of the basket (3) and passes longitudinally through the basket (3) before exiting through the set of openings (2.1) in the lid (2), the steam thereby cooking the food contained in the basket (3).

2. The food processor utensil (4) according to claim 1, **characterized in that** the upper end (1.A) comprises at least one lip (1.4) on which a flange (3.4) of the basket (3) rests.

3. The food processor utensil (4) according to claim 2, **characterized in that** the lip (1.4) runs around the outside perimeter of the upper end (1.A) converging towards the inside.

4. The food processor utensil (4) according to any one of the previous claims, **characterized in that** it comprises fixing areas to prevent the relative rotation of the casing (1, 1') with respect to the basket (3).

5. The food processor utensil (4) according to claim 4, **characterized in that** the fixing areas are selected between slots (1.1), a first notch (1.2) and a combination thereof.

6. The food processor utensil (4) according to any one of the previous claims, **characterized in that** it comprises housings (1.3) where protrusions (3.1) of the basket (3) are housed.

7. The food processor utensil (4) according to any one of the previous claims, **characterized in that** it comprises a skirt in an area of the central body (1.C) close to the lower end (1.B) for a tight joint with the lid (4.2) of the food processor (4).

8. The food processor utensil (4) according to claim 8, **characterized in that** the skirt is made of rubber.
